# EUROPÄISCHE PATENTSCHRIFT

(11) **EP 1 123 782 B1**
(45) Veröffentlichungstag und Bekanntmachung des Hinweises auf die Patenterteilung: **15.11.2006**
(21) Anmeldenummer: 01102097.1
(22) Anmeldetag: 31.01.2001
(51) Int. Cl.: B25J 9/10, B25J 17/02

(54) **Roboter mit an einem Getriebegehäuse anordbaren Halteleisten zum Festlegen von Steuernocken**
Robot provided with support rings fixed on a gear box and carrying control cams
Robot muni de bagues de maintien disposées sur le carter d'un système de transmission et sur lesquelles sont fixées de cames de contrôle

(30) Priorität: 12.02.2000 DE 20002530 U
(43) Veröffentlichungstag der Anmeldung: 16.08.2001
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost

(56) Entgegenhaltungen:
- DE-A- 2 146 720
- DE-A- 3 310 135
- DE-A- 3 522 337

## Beschreibung

Die Erfindung betrifft einen mehrachsigen Roboter mit wenigstens einem einer Roboterachse zugeordneten Getriebe mit einem Getriebegehäuse mit an dessen Umfang anordbaren Halteleisten zum Festlegen von Steuernocken zur Überwachung des Schwenkwinkels der Roboterachse.

Zur Überwachung und/oder Einstellung eines an die jeweiligen Bewegungsverhältnisse des Roboters angepaßten zulässigen Schwenkwinkels einzelner Roboterachsen ist es bekannt, an einem Roboterteil, wie der Schwinge, den Getriebeumfang folgende Steuernocken anzuordnen, die den dem gewünschten Schwenkwinkel entsprechenden Arbeitsbereich des Roboters überwachen. Zum in Umfangsrichtung drehbaren Festlegen der Steuernocken werden in der Regel Halteleisten verwendet, die am Umfang der Roboterachse verschraubt werden. Um die für einen einwandfreien Betrieb des Roboters erforderlichen geringen Toleranzen sicherzustellen, müssen die zur Befestigung der Halteleisten vorgesehenen Flächen bearbeitet, z.B. gehärtet, geschliffen, gedreht, gefräst und/oder poliert sein. Bei mehrachsigen Industrierobotern, die ein auf einem Gestell angeordnetes, um eine Grundachse (A1-Achse) schwenkbares Karussell und einen auf dem Karussell an einer Schwinge angeordneten, um mehrere Achsen verschwenkbaren Roboterarm aufweisen, werden die Halteleisten zum Festlegen der Steuernocken zum Überwachen des Schwenkwinkels der A1-Achse z.B. am Umfang eines Drehkranzes des Karussells angeordnet.

Das Dokument DE 3310135 A1 offenbart ein Robotergelenk, wobei ein mit einer Not zur Führung von Nocken versehene Bogenstück am stationären Teil des Gelenks mittels Schrauben befestigt ist.

Bei einem radialen Verschrauben der Halteleisten am Umfang des Getriebegehäuses ist einerseits die Handhabung zum Anbringen und Abnehmen der Halteleisten aufwendig, andererseits ist die Rundlaufgenauigkeit der Nuten- oder Halteleisten begrenzt.

Der Erfindung liegt die Aufgabe zugrunde, bei einem Roboter der eingangs genannten Art unter Vermeidung der vorgenannten Nachteile eine Verbindung zwischen den Halteleisten zum Festlegen der Steuernocken und dem Roboter vorzuschlagen, welche eine bestmögliche Rundlaufgenauigkeit der Halteleisten sicherstellt und einen geringen Raumbedarf erfordert.

Erfindungsgemäß wird diese Aufgabe bei einem Roboter der eingangs genannten Art dadurch gelöst, daß die Halteleisten im wesentlichen kreisbogenförmig mit einem dem Außenumfang des Getriebegehäuses etwa entsprechenden Innenumfang ausgebildet sind, und daß die Halteleisten zum Festlegen an dem Getriebegehäuse stirnseitig gegeneinander verspannbar sind.

Durch die erfindungsgemäße Ausgestaltung ist eine einfache und schnelle, direkte Montage der kreisbogenförmigen Halteleisten am Umfang des Getriebegehäuses, indem diese an dem Getriebegehäuse verspannt werden.

Durch die Erfindung wird eine exaktere Positionierung der Nutenleisten in einfacher und schnellerer Weise möglich, als dies beim Stande der Technik der Fall ist.

Zum Verspannen ist in bevorzugter Ausführung vorgesehen, daß die Halteleisten im Bereich ihrer Enden jeweils eine einen Haltestift aufnehmende Axialbohrung aufweisen, wobei jeder Haltestift von wenigstens einer Bohrung radial durchsetzt ist, die zur Aufnahme einer in die Bohrungen der Haltestifte zweier benachbarter Halteleisten durchsetzenden Spannschraube zum Verspannen der Halteleisten an dem Getriebegehäuse dient. Derart kann die Umfangsverspannung der Halteleisten an dem Getriebegehäuse mittels der Spannschrauben eingestellt werden.

Zweckmäßig sind die Haltestifte von jeweils zwei eine Spannschraube aufnehmenden Bohrungen durchsetzt, wobei bevorzugt zumindest eine der von der Spannschraube durchsetzten Bohrungen der Haltestifte zweier benachbarter Halteleisten eine Gewindebohrung ist, in deren Gewinde die zugehörige Spannschraube eingreift.

In bevorzugter Ausführung sind die Halteleisten mittels der zumindest einseitig aus den Axialbohrungen der Halteleisten herausragenden Haltestifte umfangsmäßig am Getriebegehäuse fixierbar, wobei beispielsweise ein aus den Axialbohrungen der Halteleisten herausragender Kopf der Haltestifte in einer ausgeformten Ausnehmung rastbar ist, auf dem das Getriebe befestigt ist oder mit dem Getriebegehäuse stark verbunden ist.

Die Halteleisten sind bevorzugt in an sich bekannter Weise als Nutenleisten mit außenseitig um ihren Umfang umlaufenden Stegen und Nuten zum Festlegen der Steuernocken ausgebildet, wobei die Stege der Nutenleisten insbesondere ein im wesentlichen T-förmiges Profil aufweisen.

Zweckmäßig sind zwei, das Getriebegehäuse im wesentlichen vollständig umgreifende, kreisbogenförmige Halteleisten vorgesehen, die das Getriebegehäuse um jeweils 180° umspannen.

Gemäß bevorzugter Ausgestaltung ist vorgesehen, daß der Innenumfang der Halteleisten ein zu einem am Außenumfang des Getriebegehäuses angeordneten Halteprofil komplementäres Profil zum formschlüssigen Verspannen der Halteleisten an dem Getriebegehäuse aufweist.

Das zu dem Halteprofil des Getriebegehäuses komplementäre Profil der Halteleisten sorgt für einen axialen Formschluß, so daß die Teile beim Verspannen exakt positioniert werden. Aufgrund der Umfangsverspannung und der symmetrischen Anordnung ist eine größtmögliche Rundlaufgenauigkeit der Nutenleisten garantiert.

In bevorzugter Ausführung ist vorgesehen, daß das Halteprofil des Getriebegehäuses wenigstens einen Umfangsbund und das Profil der Halteleisten wenigstens eine hierzu komplementäre Umfangsnut aufweist, oder das Halteprofil des Getriebegehäuses weist wenigstens eine Umfangsnut und das Profil der Halteleisten wenigstens eine einen hierzu komplementären Umfangsbund auf. Zur Ausbildung des Halteprofils an dem in der Regel als Drehstahlteil gebildetes Getriebegehäuse ist somit lediglich eine einfache und kostengünstige, z.B. spanabhebende Bearbeitung erforderlich.

Nachstehend ist die Erfindung anhand einer bevorzugten Ausführung unter Bezugnahme auf die Zeichnungen näher erläutert. Dabei zeigen:
- Fig.1: eine perspektivische Ansicht eines Getriebes eines Roboters mit am Umfang eines Getriebegehäuses angeordneten Halteleisten zum Festlegen von Steuernokken;
- Fig.2: eine perspektivische Detailansicht der auf dem Getriebegehäuse gemäß Fig. 1 angeordneten Halteleisten;
- Fig.3: eine schematische Detailansicht eines Querschnitts durch das Getriebe gemäß Fig. 1 und
- Fig.4: eine schematische Detailansicht eines Längsschnitts durch das Getriebe gemäß Fig. 1.

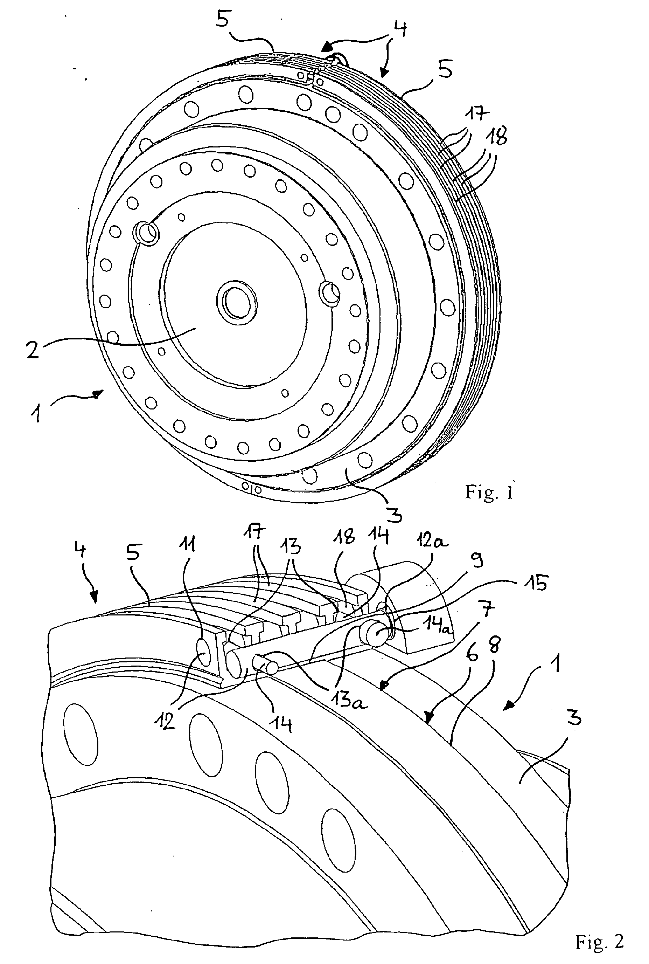

In Fig. 1 ist ein Getriebe einer Roboterachse eines Roboters (nicht gezeigt) mit einer in einem Getriebegehäuse 3 gelagerten Getriebewelle 2 dargestellt. Am Umfang des Getriebegehäuses 3 sind zwei kreisbogenförmige Halteleisten 4 zum Anbringen von Steuernocken (nicht dargestellt) zur Überwachung des Schwenkwinkels der Roboterachse relativ zu einem mit der Getriebewelle 2 drehfest verbundenen Roboterteil, an dem durch die Steuernocken betätigte Schalter angebracht sind (nicht gezeigt), angeordnet. In der gezeigten Ausführung sind die Halteleisten 4 als Nutenleisten 5 mit außenseitig um ihren Umfang umlaufenden Stegen 17 und Nuten 18 zum Festlegen der Steuernocken ausgebildet. Im vorliegenden Fall sind zwei das Getriebegehäuse 3 vollständig umgreifende Nutenleisten 5 vorgesehen, die sich jeweils um den halben Umfang des Getriebegehäuses 3 erstrecken.

Wie der Fig. 2 zu entnehmen ist, sind die Nutenleisten 5 nach Miteinander-Verspannen durch Nut-Feder-Ausbildung axial gehalten. Hierzu weist der Außenumfang des Getriebegehäuses 3 ein Halteprofil 6 und der Innenumfang der Halteleisten 4 ein zu diesem komplementäres Profil 7 zum formschlüssigen Verspannen der Halteleisten 4 an dem Getriebegehäuse 3 auf. Während das Halteprofil 6 des Getriebegehäuses 3 einen im wesentlichen zentralen Umfangsbund 8 aufweist, ist das Profil 7 der Halteleisten 4 in Form einer hierzu komplementären Umfangsnut 9 ausgebildet, so daß die Halteleisten 4 beim Aufspannen auf das Getriebegehäuse 3 axial formschlüssig fixiert sind.

Zum Verspannen der Halteleisten 4 weisen diese im Bereich ihrer Enden jeweils eine achsparallele Bohrung 11 auf, die einen Haltestift 12 aufnimmt. Die Haltestifte 12 sind von jeweils zwei Bohrungen 13, 13a radial durchsetzt, die zur Aufnahme einer Spannschraube 14 dienen. Die Spannschrauben 14 zum Verspannen der Halteleisten 4 durchsetzen jeweils die Bohrungen 13, 13a der Haltestifte 12 zweier benachbarter Halteleisten 4, wobei zumindest die einem Kopf 14a der Spannschrauben 14 abgewandten Bohrungen 13, 13a vorzugsweise als Gewindebohrungen ausgebildet sind, in deren Gewinde die Spannschrauben 14 eingreifen. Mittels der Spannschrauben 14 ist die Umfangsverspannung der Halteleisten 4 auf dem Getriebegehäuse 3 einstellbar.

Um die Halteleisten 4 in Umfangsrichtun am Getriebegehäuse 3 fixieren zu können, weisen die Haltestifte 12 jeweils einen aus den endseitig der Halteleisten 4 angeordneten Axialbohrungen 11 herausragenden Kopf 12a auf, der in einer am Roboterteil 3, auf dem das Getriebegehäuse befestigt ist, wie der Schwinge, ausgeformten Ausnehmung 15 rastbar ist. Zur Befestigung der Steuernocken an den als Nutenleisten 5 ausgebildeten Halteleisten 4 sind deren Stege 17 mit einem im wesentlichen T-förmigen Profil versehen, an dem die Steuernocken (nicht dargestellt) kraftschlüssig verspannt werden.

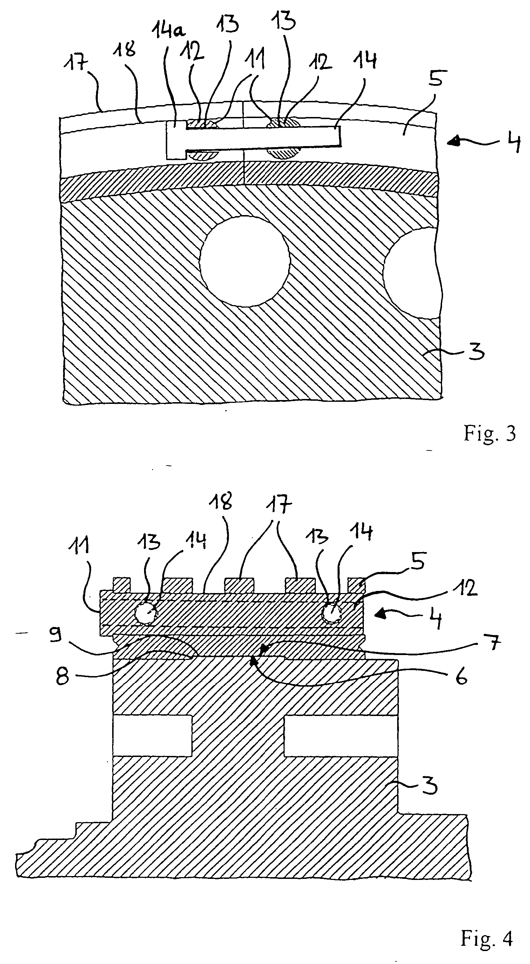

In Fig. 3 ist nochmals ein schematischer Querschnitt durch das Getriebegehäuse 3 gemäß Fig. 1 im Verbindungsbereich der beiden Halteleisten 4 dargestellt. Die Halteleisten 4 sind mittels der Spannschrauben 14 gegeneinander verspannt, welche die in den Axialbohrungen 11 an den Enden der Halteleisten 4 angeordneten Haltestifte 12 radial durchsetzen und die Halteleisten 4 dadurch gegeneinander verspannen.

Das als Umfangsbund 8 ausgebildete Halteprofil 6 des Getriebegehäuses 3 und das hierzu komplementäre, als Umfangsnut 9 ausgebildete Profil 7 der Halteleisten 4 ist in Fig. 4 nochmals im Längsschnitt gezeigt.

## Patentansprüche

1. Mehrachsiger Roboter mit wenigstens einem einer Roboterachse zugeordneten Getriebe mit einem Getriebegehäuse mit anordbaren Halteleisten zum Festlegen von Steuernocken zur Überwachung des Schwenkwinkels der Roboterachse, **dadurch gekennzeichnet, daß** die Halteleisten (4) im wesentlichen kreisbogenförmig mit einem dem Außenumfang des Getriebegehäuses (3) etwa entsprechenden Innenumfang ausgebildet sind, und daß die Halteleisten (4) zum Festlegen an dem Getriebegehäuse (3) stirnseitig gegeneinander verspannbar sind.

2. Roboter nach Anspruch 1, **dadurch gekennzeichnet, daß** die Halteleisten (4) im Bereich ihrer Enden jeweils eine einen Haltestift (12) aufnehmende Axialbohrung (11) aufweisen, wobei jeder Haltestift (12) von wenigstens einer Bohrung (13) radial durchsetzt ist, die zur Aufnahme einer die Bohrungen (13, 13a) der Haltestifte (12) zweier benachbarter Halteleisten (4) durchsetzenden Spannschraube (14) zum Verspannen der Halteleisten (4) an dem Getriebegehäuse (3) dient.

3. Roboter nach Anspruch 2, **dadurch gekennzeichnet, daß** die Haltestifte (12) von jeweils zwei Bohrungen (13, 13a) durchsetzt sind.

4. Roboter nach Anspruch 2 oder 3, **dadurch gekennzeichnet, daß** zumindest eine der von der Spannschraube (14) durchsetzten Bohrungen (13, 13a) der Haltestifte (12) zweier benachbarter Halteleisten (4) eine Gewindebohrung ist.

5. Roboter nach einem der Ansprüche 2 bis 4, **dadurch gekennzeichnet, daß** die Halteleisten (4) mittels der zumindest einseitig aus den Axialbohrungen (11) der Halteleisten (4) herausragenden Haltestifte (12) radial am Getriebegehäuse (3) fixierbar sind.

6. Roboter nach einem der Ansprüche 1 bis 5, **dadurch gekennzeichnet, daß** die Halteleisten (4) als Nutenleisten (5) mit außenseitig um ihren Umfang umlaufenden Stegen (17) und Nuten (18) zum Festlegen der Steuernocken ausgebildet sind.

7. Roboter nach Anspruch 6, **dadurch gekennzeichnet, daß** die Stege (17) der Nutenleisten (5) ein im wesentlichen T-förmiges Profil aufweisen.

8. Roboter nach einem der Ansprüche 1 bis 7, **dadurch gekennzeichnet, daß** zwei das Getriebegehäuse (3) im wesentlichen vollständig umgreifende Halteleisten (4) vorgesehen sind.

9. Roboter nach einem der Ansprüche 1 bis 8, **dadurch gekennzeichnet, daß** der Innenumfang der Halteleisten (4) ein zu einem am Außenumfang des Getriebegehäuses (3) angeordneten Halteprofil (6) komplementäres Profil (7) zum formschlüssigen Verspannen der Halteleisten (4) an dem Getriebegehäuse (3) aufweist.

10. Roboter nach Anspruch 9, **dadurch gekennzeichnet, daß** das Halteprofil (6) des Getriebegehäuses (3) wenigstens einen Umfangsbund (8) und das Profil (7) der Halteleisten (4) wenigstens eine hierzu komplementäre Umfangsnut (9) aufweist.

11. Roboter nach Anspruch 9, **dadurch gekennzeichnet, daß** das Halteprofil (6) des Getriebegehäuses (3) wenigstens eine Umfangsnut und das Profil (7) der Halteleisten (4) wenigstens einen hierzu komplementären Umfangsbund aufweist.

## Claims

1. Multiaxial robot with at least one gear associated with a robot axis and having a gearbox with retaining bands for fixing control cams for monitoring the pivoting angle of the robot axis, **characterized in that** the retaining bands (4) are constructed substantially arcuately with an inner circumference roughly corresponding to the outer circumference of gearbox (3), and that the retaining bands (4) for fixing the gearbox (3) can be frontally braced against one another.

2. Robot according to claim 1, **characterized in that** in the vicinity of their ends, each of the retaining bands (4) has an axial hole (11) receiving a retaining pin (12), each retaining pin (12) being radially traversed by at least one hole (13) which is used for receiving the locking screw (14) for bracing the retaining bands (4) on gearbox (3) traversing the holes (13, 13a) of retaining pins (12) of two adjacent retaining bands (4).

3. Robot according to claim 2, **characterized in that** the retaining pins (12) are in each case traversed by two holes (13, 13a).

4. Robot according to claim 2 or 3, **characterized in that** at least one of the holes (13, 13a) of retaining pins (12) of two adjacent retaining bands (4) traversed by the locking screw (14) is a taphole.

5. Robot according to one of the claims 2 to 4, **characterized in that** the retaining bands (4) are radially fixable to the gearbox (3) by means of the retaining pins (12) projecting on at least one side from the axial holes (11) of retaining bands (4).

6. Robot according to one of the claims 1 to 5, **characterized in that** the retaining bands (4) are constructed as grooved bands (5) with, for the fixing of the control cams, grooves (18) and webs (17) passing externally around their circumference.

7. Robot according to claim 6, **characterized in that** the webs (17) of the grooved bands (5) have a substantially T-shaped profile.

8. Robot according to one of the claims 1 to 7, **characterized in that** there are two retaining bands (4) substantially completely embracing the gearbox (3).

9. Robot according to one of the claims 1 to 8, **characterized in that** the inner circumference of the retaining bands (4) has a profile (7) complimentary to a retaining profile (6) located on the outer circumference of gearbox (3) for the positive bracing of the retaining bands (4) on gearbox (3).

10. Robot according to claim 9, **characterized in that** the retaining profile (6) of gearbox (3) has at least one circumferential collar (8) and the profile (7) of retaining bands (4) at least one circumferential groove (9) complimentary thereto.

11. Robot according to claim 9, **characterized in that** the retaining profile (6) of gearbox (3) has at least one circumferential groove and the profile (7) of retaining bands (4) at least one circumferential collar complimentary thereto.

## Revendications

1. Robot pluriaxial présentant au moins un jeu d'engrenages associé à un axe de robot et un carter de protection des engrenages pourvu de barres de fixation destinées à fixer des cames radiales pour contrôler l'angle de pivotement de l'axe du robot, **caractérisé en ce que** les barres de fixation (4) sont conformées sensiblement en arc de cercle dont la circonférence intérieure correspond sensiblement à la circonférence extérieure du carter de protection des engrenages (3), et **en ce que** les barres de fixation (4) peuvent être gauchies par leur face frontale l'une contre l'autre pour la fixation sur le carter de protection des engrenages (3).

2. Robot selon la revendication 1, **caractérisé en ce que** les barres de fixation (4) présentent dans chacune de leurs zones d'extrémité un perçage axial (11) recevant une goupille de fixation (12), chaque goupille de fixation (12) présentant au moins un perçage (13) radial servant à recevoir une vis de serrage (14) traversant les perçages (13,13a) des goupilles de fixation (12) de deux barres de fixation (4) contiguës pour fixer les barres de fixation (4) au carter de protection des engrenages (3).

3. Robot selon la revendication 2, **caractérisé en ce que** les goupilles de fixation (12) présentent chacune deux perçages (13,13a).

4. Robot selon la revendication 2 ou 3, **caractérisé en ce qu'**au moins un des perçages (13,13a) traversés par la vis de serrage (14) des goupilles de fixation (12) de deux barres de fixation (4) contiguës est un perçage taraudé.

5. Robot selon l'une quelconque des revendications 2 à 4, **caractérisé en ce que** les barres de fixation (4) peuvent être fixées radialement au carter de protection des engrenages (3) au moyen des goupilles de fixation (12) sortant au moins d'un côté des perçages axiaux (11) des barres de fixation (4).

6. Robot selon l'une quelconque des revendications 1 à 5, **caractérisé en ce que** les barres de fixation (4) sont conformées en barres à encoches (5) présentant sur leur périmètre extérieur des ailes médianes (17) et des rainures (18) périmétriques pour la fixation des cames radiales.

7. Robot selon la revendication 6, **caractérisé en ce que** les ailes médianes (17) des barres à encoches (5) présentent un profil sensiblement en forme de T.

8. Robot selon l'une quelconque des revendications 1 à 7, **caractérisé en ce que** l'on prévoit deux barres de fixation (4) entourant sensiblement complètement le carter de protection des engrenages (3).

9. Robot selon l'une quelconque des revendications 1 à 8, **caractérisé en ce que** le périmètre intérieur des barres de fixation (4) présente un profil complémentaire au profil de retenue (6) disposé sur le périmètre extérieur du carter de protection des engrenages (3) pour la fixation à ajustement de forme des barres de fixation (4) au carter de protection des engrenages (3).

10. Robot selon la revendication 9, **caractérisé en ce que** le profil de retenue (6) du carter de protection des engrenages (3) présente au moins un épaulement périmétrique (8) et **en ce que** le profil (7) des barres de fixation (4) présente au moins une rainure périmétrique (9) complémentaire de celui-ci.

11. Robot selon la revendication 9, **caractérisé en ce que** le profil de retenue (6) du carter de protection des engrenages (3) présente au moins une rainure périmétrique et **en ce que** le profil (7) des barres de fixation (4) présente au moins un épaulement périmétrique qui lui est complémentaire.
